# EUROPEAN PATENT SPECIFICATION

(11) **EP 4 680 686 B1**
(45) Date of publication and mention of the grant of the patent: **14.10.2026**
(21) Application number: 25726294.9
(22) Date of filing: 22.05.2025
(51) Int. Cl.: C09J 179/02, D21H 21/14, C09J 139/02

(54) **CREPING ADHESIVE COMPOSITION**
KREPPKLEBEMITTELZUSAMMENSETZUNG
COMPOSITION ADHÉSIVE DE CRÊPAGE

(30) Priority: 27.05.2024 FR 2405428
(43) Date of publication of application: 21.01.2026
(73) Proprietor: SNF Group, 42160 Andrézieux-Bouthéon (FR)
(72) Inventor: DA SILVA, Eric, 42160 ANDREZIEUX-BOUTHEON (FR); BARRIERE, Cyril, 42160 ANDREZIEUX-BOUTHEON (FR); COLLOT, Pierre, 42160 ANDREZIEUX-BOUTHEON (FR); FAVERO, Cédrick, 42160 ANDREZIEUX-BOUTHEON (FR)
(74) Representative: Ipsilon
(86) International application number: PCT/EP2025/064226
(87) International publication number: WO 2025/247760

(56) References cited:
- EP-A1- 3 400 799
- DE-A1- 102005 007 483
- US-A1- 2007 000 631
- US-A1- 2009 133 846
- US-A1- 2017 055 530
- US-A1- 2017 190 632

## Description

### Technical field of the invention

The invention relates to a creping adhesive composition and the use thereof in manufacturing tissue paper.

### Prior art

In the process of manufacturing tissue paper, the paper sheet is dried by means of a steam-heated dryer cylinder, named Yankee. An adhesive is used to cover the surface of the Yankee in order to adhere the wet sheet to the dryer. This improves the transfer of heat to the sheet, enabling a more effective drying, and especially this ensures the adherence of the sheet, in order to achieve a good creping. The creping consists of compressing the sheet against a blade, named creping blade, in order to break the bonds between the fibres and to form a microfold structure. The creping breaks a large number of fibre-fibre bonds in the sheet, which gives to the latter volume, stretching capacity, absorption and softness properties. The degree of adhesion provided by the adhesive therefore plays an important role in developing tissue paper properties.

The uniformity of the adhesive coating is also important, not only to ensure a regular creping, but also to ensure a uniform coverage of the surface of the Yankee and thus avoid the premature wear of the cylinder and of the blade thereof. Indeed, the premature wear of the creping blades, involves replacing the latter, which leads to downtime of the paper machine, and therefore a production loss.

Another important parameter is the durability of the coating. It is characterised by the stability of the coating on the surface of the Yankee. If the coating is removed easily, it does not protect the Yankee and leads to excessive wear. A hard coating causes the stick-slip motion of the blade, which also leads to excessive wear. It is therefore preferable to use a flexible, but durable coating.

A quality Yankee coating corresponds to a uniform, flexible and durable film, offering good adherence for an effective creping.

The most commonly used Yankee adhesives are synthetic polymers such as polyaminoamides, polyamides, polyamines, polyvinyl alcohols, polyvinyl acetates, polyacrylamides and polyethers. Furthermore, various additives are used to modify the properties of the Yankee coating. A few examples of compositions, appliances and methods which are useful for obtaining crepe tissue paper are described in documents US 5,374,338, US 5,374,339, US 5,374,334, US 5,994,449, US 6,663,942, US 5,660,687, US 6,207,011, WO 2006/048131, WO 2007/005577, US 2005/028954, US 2005/245669 and US 2005/006040.

US2007/000631 describes a method of creping paper products in which a paper web is adhered to a creping cylinder using poly(vinylamine/vinylformamide) compositions having a pH of about 6.5 to about 8.

EP 3 400 799 A1 relates to polymeric antimicrobial compositions comprising an amine functional cationic polymer and silver halide.

Even if numerous adhesives have been developed, there is still a need for a creping adhesive composition offering a better adherence to the Yankee, reducing the wear of the blade and more durable to ensure a better execution of the process of manufacture of the tissue paper.

The Applicant has discovered a new Yankee adhesive composition offering better adhesive properties while preserving a soft coating.

Using the creping adhesive composition according to the invention falls under a principle of environmental awareness and of the impact of industries and man on the planet. The composition offers better performance that commonly used adhesives, which makes it possible to reduce the quantity of adhesive used in the tissue paper manufacturing process, thus reducing the overall emission of greenhouse gases, such as CO₂.

### Disclosure of the invention

The present invention relates to a creping adhesive composition comprising:
A/ at least one polymer P1 and at least one polymer P2; said at least one polymer P1 and at least one polymer P2 representing between 10 and 60% by weight of the adhesive composition; and
B/ at least one hydrophilic solvent representing between 40 and 90% by weight of the adhesive composition;
   i) the polymer P1, having an average molecular weight by weight of between 50 000 and 950 000 g/mol, chosen from the group consisting of:
      * polyamines obtained by Hofmann rearrangement on a base polymer PB1 of at least one monomer chosen from the group consisting of acrylamide, methacrylamide and their mixtures;
      * polyamines obtained by hydrolysis of amide groups -N(R²)-CO-R¹ of a base polymer PB2 of at least one monomer of formula (I); and 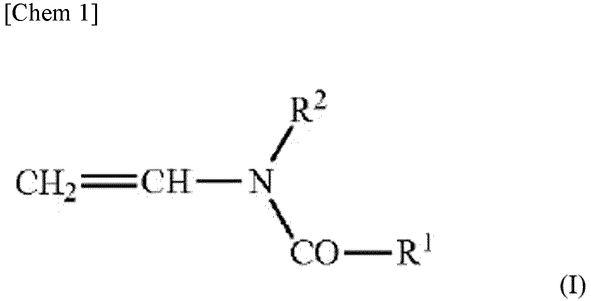 wherein:
         R¹ and R² are, independently, a hydrogen atom or an alkyl chain having from 1 to 6 carbon atoms; and
         * their mixtures,
   ii) the polymer P2, having an average molecular weight by weight of between 1 500 and 500 000 g/mol, chosen from the group consisting of:
      * polyethyleneimines obtained by polycondensation of ethylene dichloride with ammonia,
      * polyethyleneimines obtained by polycondensation of aziridine, and
      * their mixtures
      the weight ratio between polymer P1 and polymer P2 in the composition is comprised between 20:80 and 80:20.

The present invention also relates to a method for manufacturing tissue paper comprising the use of said creping adhesive composition.

### Description of the invention

By "tissue paper" is meant a toilet paper, a kitchen roll and other domestic-use absorbent paper products, for example toilet tissue, paper handkerchiefs, paper towels, kitchen towel, paper serviettes and paper refreshing wipes. For more clarity in the description of the invention, the term "tissue paper" is used to mean "tissue paper and tissue product" products, such as defined by the standard ISO 12625-1.

By "polymer", is meant a homopolymer or a copolymer. A homopolymer is a polymer composed of a single identical repetitive unit and a copolymer is composed of two repetitive units. The polymer is obtained by polymerisation of one or more monomer(s). The monomer(s) is/are chosen from among anionic hydrophilic monomers, cationic hydrophilic monomers, non-ionic hydrophilic monomers, zwitterionic hydrophilic monomers, hydrophobic monomers and their mixtures.

By "hydrophilic monomer", is meant a monomer that has an octanol-water partition coefficient, K_{ow}, less than or equal to 1, in which the partition coefficient K_{ow} is determined at 25°C in an octanol-water mixture with a volume ratio of 1/1, at a pH of between 6 and 8.

By molecular weight Mw is meant an average molecular weight by weight.

The term "hydrophobic monomer" should be understood to mean a monomer that has an octanol-water partition coefficient, K_{ow}, greater than 1, in which the partition coefficient K_{ow} is determined at 25°C in an octanol-water mixture with a volume ratio of 1/1, at a pH of between 6 and 8.

The octanol-water partition coefficient, K_{ow}, represents the ratio of concentrations (g/L) of a monomer between the octanol phase and the aqueous phase. It is defined as follows: [Math 1] ${K}_{ow} = \frac{{\left[monomer\right]}_{octanol}}{{\left[monomer\right]}_{water}}$

By "water-soluble polymer", is meant a polymer that gives an aqueous solution without insoluble particles when it is dissolved under stirring at 25°C and with a concentration of 10 g.L⁻¹ in deionised water.

By "X and/or Y", is meant "X", or "Y", or "X and Y".

Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20. The molecular weight is determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation: $\left[η\right] = K {M}^{α}$
**[η]** represents the intrinsic viscosity of the polymer as determined by the solution viscosity measurement method.
**K** represents an empirical constant.
**M** represents the molecular weight of the polymer.
**α** represents the Mark-Houwink coefficient.
**K** and **α** depend on the particular polymer-solvent system.

### Creping adhesive composition

### Polymer P1

The polymer P1 has a molecular weight Mw of between 50 000 and 950 000 g/mol. The polymer P1 comprises at least one monomer obtained: by Hofmann rearrangement on a base polymer PB1 of of at least one monomer chosen from the group consisting of acrylamide, methacrylamide and their mixtures; or by hydrolysis of amide groups N-(R²)-CO-R¹ of a base polymer PB2 of at least one monomer of formula (I) : 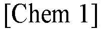 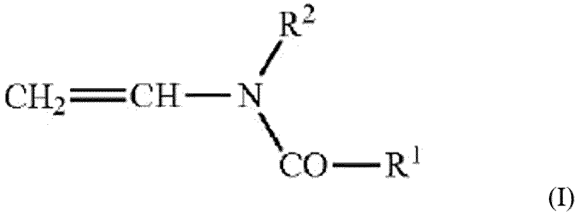 wherein:
R¹ and R² are, independently, a hydrogen atom or an alkyl chain having from 1 to 6 carbon atoms; and their mixtures.

The Hofmann rearrangement on the base polymer PB1 and the hydrolysis of amide groups -N(R²)-CO-R¹ of the base polymer PB2 produce vinylamine monomer units.

The amines obtained by Hofmann rearrangement or hydrolysis of amide groups can be in neutral form (i.e. not charged or non-ionic) or ionic (i.e. in ammonium form).

In other words, by "amine", is meant the neutral form and the ionic form (i.e. ammonium).

### Hofmann rearrangement of the base polymer PB1

The Hofmann rearrangement consists of converting amide functions into amine functions (for example, by formation of vinylamine monomer units) by involving two main coefficients (expressed in molar ratios):

| | |
|---|---|
| - | Coefficient Alpha = hypo-halide (alkali metal hypohalite and/or alkaline earth metal hypohalite) / amide functions; |
| - | Coefficient Beta = hydroxide (alkali metal hydroxide and/or alkaline earth metal hydroxide) / hypohalite (alkali metal hypohalite and/or alkaline earth metal hypohalite). |

A "hypohalite" is an oxy-anion, for example, the hypochlorite ClO⁻. Preferably, this is sodium hypochlorite.

An "alkali metal hypohalite" is a hypohalite of at least one alkali metal, for example, NaOCl, KOBr or NaOCl+KOBr. The same applies to an alkaline earth hypohalite.

The alkali metal is advantageously chosen from among: lithium, sodium or potassium.

The alkaline earth metal is advantageously chosen from among: calcium or magnesium.

An "alkali hydroxide" means a compound containing a hydroxide anion (OH⁻) and an alkali metal, for example, NaOH, KOH or their mixture (NaOH+KOH). The same applies for an alkaline earth hydroxide. Preferably, this is sodium hydroxide.

The term "hydroxide" used hereafter means both an "alkali hydroxide" and an "alkaline earth hydroxide".

Advantageously, the Hofmann rearrangement comprises at least the following steps:
i) dilution, advantageously in water, of the solution comprising the base polymer PB1, in order to form a diluted solution SD1 of the polymer with amide functions;
ii) addition of the hypohalite and the hydroxide, in order to form a diluted solution (SD2);
iii) reaction between the base polymer PB1, the hypohalite and the hydroxide;
iv) obtaining a solution comprising the polymer P1 (SD3).

Advantageously, in step i), the concentration of the base polymer P1 in the dilute solution SD1 is comprised between 1% and 40% by weight with respect to the weight of solution SD1, preferably between 2% and 30% and more preferably between 5% and 25%.

Advantageously, in step ii), the coefficient Alpha is comprised between 0.1 and 1.0, preferably between 0.3 and 1.0 and more preferably between 0.5 and 1.0.

Advantageously, in step ii), the coefficient Beta is comprised between 0.5 and 4.0.

Advantageously, in step iii), the reaction between the base polymer PB1, the hypohalite and hydroxide lasts between 10 seconds and 180 minutes, preferably between 1 minute and 120 minutes, more preferably between 10 minutes and 90 minutes, and even more preferably between 30 minutes and 75 minutes.

Advantageously, in step iii), the reaction between the base polymer PB1, the hypohalite and the hydroxide is performed at a temperature of between 10°C and 30°C, preferably between 15°C and 25°C.

From step iii), the polymer P1 is obtained.

In order to stabilise the amine functions of the polymer P1, obtained following the rearrangement, a person skilled in the art can add at least one quaternary ammonium derivative such as described in document JP 57077398. The aim of this quaternary ammonium derivative is avoiding the reaction between the amine functions and the residual amide functions. The addition of these agents can be done separately, simultaneously, as a mixture or not, in any order of introduction, and at one or more injection points. Advantageously, the addition of these agents is done in step i).

During the Hofmann rearrangement, the cationicity of the polymer increases by the use/consumption, in whole or in part, of an alkali or alkaline earth hypohalite.

P1 has advantageously a percentage of amide functions (acrylamide and/or methacrylamide) rearranged in amine functions of between 1 and 100 mol%, preferably between 10 and 90 mol%, more preferably between 20 and 80 mol%, more preferably between 30 and 70 mol%, and even more preferably between 40 and 60 mol%, with respect to the total number of moles of acrylamide and/or methacrylamide of the base polymer PB1.

Thus, the Hofmann rearrangement can be total or partial.

Thus, in the case of the Hofmann rearrangement, "polyamine" means a polymer comprising amine functions (total Hofmann rearrangement = 100%) or a mixture of residual amine and amide functions.

### Hydrolysis of the monomer of formula (I) of the base polymer PB2

Advantageously, the monomer(s) of formula (I) are chosen from the group consisting of: N-vinylformamide, N-vinyl-N-methylformamide, N-vinylacetamide, N-vinyl-N-methylacetamide, N-vinyl-N-ethylacetamide, N-vinylpropanamide, N-vinyl-N-methylpropianamide and N-vinylbutyramide and their mixtures. Preferably, this is N-vinylformamide.

Hydrolysis of the monomer of formula (I) can be performed under the action of an acid (acid hydrolysis) or a base (basic hydrolysis). Preferably, this is a basic hydrolysis.

Acid hydrolysis can be performed using any acid known to a person skilled in the art, by way of example and in a non-limiting manner, mention can be made, in particular, of hydrochloric acid, sulphuric acid, nitric acid or phosphoric acid.

Acid hydrolysis is advantageously performed at a pH of between 0 and 2, preferably between 0 and 1.

Acid hydrolysis is advantageously performed at a temperature of between 60°C and 100°C, preferably between 70°C and 90°C, more preferably between 75°C and 85°C.

The acid hydrolysis step advantageously lasts between 120 minutes and 720 minutes, preferably between 180 minutes and 600 minutes, more preferably between 300 minutes and 540 minutes.

Basic hydrolysis can be performed using any base known to a person skilled in the art, by way of example and in a non-limiting manner, mention can be made in particular of sodium hydroxide, potassium hydroxide or ammonia.

Basic hydrolysis is advantageously performed at a pH of between 8 and 14, preferably between 8 and 13, more preferably between 9 and 12.

Basic hydrolysis is advantageously performed at a temperature of between 60°C and 100°C, preferably between 70°C and 90°C, more preferably between 75°C and 85°C.

The basic hydrolysis step advantageously lasts between 60 minutes and 480 minutes, preferably between 120 minutes and 420 minutes, more preferably between 240 minutes and 360 minutes.

According to the quantity of acid or base added, the amide groups -N(R²)-CO-R¹ of the base polymer PB2 are partially or totally converted into amine.

P1 has advantageously a degree of hydrolysis of between 1 and 100 mol%, preferably between 10 and 90 mol%, more preferably between 20 and 80 mol%, more preferably between 30 and 70 mol%, and even more preferably between 40 and 60 mol%, with respect to the total number of mols of the amide groups -N(R²)-CO-R¹ of the base polymer PB2.

Thus, the hydrolysis of the amide groups into amine can be total or partial.

Thus, in the case of hydrolysis, "polyamine" means a polymer comprising amine functions (total hydrolysis = 100%) or a mixture of residual amine and amide functions.

Once the hydrolysis reaction is complete, the pH is advantageously adjusted between 6 and 9.

In a particular embodiment, the polymer P1 (and therefore the base polymer PB1 or PB2) comprises at least one monomer having a quaternary amine function.

Advantageously, the monomer(s) having a quaternary amine function are chosen from the group consisting of monomers derived from vinyl-type units (advantageously acrylamide, acrylic, allylic or maleic), these monomers having a quaternary ammonium function. In particular and in a non-limiting manner, mention can be made of diallyldialkyl ammonium salts such as diallyldimethyl ammonium chloride (DADMAC); quaternised salts of dialkylaminoalkylacrylamides; quaternised salts of dialkylaminoalkyl methacrylamides such as methacrylamido-propyl trimethyl ammonium chloride (MAPTAC), acrylamido-propyl trimethyl ammonium chloride (APTAC), quaternised salts of dialkyl aminoalkyl acrylate, such as quaternised dimethylaminoethyl acrylate, quaternised salts of dialkyl aminoalkyl methacrylate, such as quaternised dimethylaminoethyl methacrylate and their mixtures. Advantageously, the alkyl groups are C₁-C₃. Preferably, the monomer having a quaternary amine function is diallyl dimethyl ammonium chloride (DADMAC).

A person skilled in the art will know how to prepare the quaternised monomers, for example, by means of an R-X-type quaternisation agent, R being an alkyl group and X being a halogen or a sulphate.

By "quaternisation agent", is meant a molecule being able to alkylate a tertiary amine.

The quaternisation agent can be advantageously chosen from among dialkyl sulphates comprising from 1 to 6 carbon atoms or alkyl halides comprising from 1 to 6 carbon atoms. Preferably, the quaternisation agent is chosen from among methyl chloride, benzyl chloride, dimethyl sulphate or diethyl sulphate. Furthermore, the present invention also covers DADMAC-, APTAC- and MAPTAC-type monomers which counterion is a sulphate, a fluoride, a bromide or an iodide instead of chloride.

The polymer P1 (and therefore the base polymer PB1 or PB2) advantageously comprises at least 25 mol% of monomer having a quaternary amine, preferably at least 35 mol% and more advantageously, at most 50mol%.

The polymer P1 (and therefore the base polymer PB1 or PB2) can also contain at least one monomer A chosen from among hydrophilic non-ionic monomers, hydrophilic anionic monomers, hydrophilic zwitterionic monomers and hydrophobic monomers.

Advantageously, the polymer P1 (and therefore the base polymer PB1 or PB2) comprises less than 30 mol% of monomer A, preferably less than 20 mol%.

Advantageously, the hydrophilic non-ionic monomer(s) are chosen, in particular, from the group comprising vinyl monomers which are soluble in water, such as N-alkylacrylamides, N-alkylmethacrylamides, N,N-dialkyl acrylamides (for example, N,N-dimethylacrylamide or N,N-diethylacrylamide), N,N-dialkylmethacrylamides, acrylic acid alkoxylated esters, methacrylic acid alkoxylalted esters, N-vinylpyrrolidone, N-methylol(meth)acrylamide, N-vinyl caprolactame, N-vinyl imidazole, N-vinyl succinimide, acryloyl morpholine (ACMO), glycidyl methacrylate, glyceryl methacrylate, diacetone acrylamide, methacrylic anyhydride, maleic anydride, itaconic anhydride, itaconamide, hydroxyalkyl (meth)acrylate, thioalkyl (meth)acrylate, isoprenol and its alcoxyl derivatives, hydroxyethyl(meth)acrylates and their alcoxyl derivatives, hydroxypropylacrylate and its alcoxyl derivatives, vinyl acetate and their mixtures. Among these non-ionic monomers, the alkyl groups are advantageously C₁-C₅, and more advantageously C₁-C₃. They are preferably linear alkyls.

When the polymer P1 is obtained by hydrolysis of amide groups -N(R²)-CO-R¹ of the base polymer PB2, the polymer P1 (and therefore the base polymer PB2) can further comprise, as hydrophilic non-ionic monomers, acrylamide, methacrylamide, acrylonitrile and their mixtures.

Advantageously, the other anionic hydrophilic monomer(s) can be chosen from a large group. These monomers can have a vinyl function, in particular, acrylic, maleic, fumaric, malonic, itaconic, or allylic. They can also contain a carboxylate, phosphonate, phosphate, sulphonate group, or another anionic filler group. Preferred monomers belonging to this class are, for example, acrylic acid; methacrylic acid; dimethylacrylic acid; itaconic acid; C₁-C₃ itaconic acid half-esters; acryloyl chloride; crotonic acid; maleic acid; fumaric acid; 3-acrylamido 3-methylbutanoic acid; strong acid-type monomers having, for example, a sulphonic acid-type or phosphonic acid-type function, such as vinylsulphonic acid, vinylphosphonic acid, allylsulphonic acid, methallylsulphonic acid, 2-methylidenepropane-1,3-disulphonic acid, 2-sulphoethylmethacrylate, sulphopropylmethacrylate, sulphopropylacrylate, allylphosphonic acid, ethylene glycol methacrylate phosphate, sulphonic styrene acid, 2-acrylamido-2-methylpropane sulphonic acid (ATBS), 2-acrylamido-2-methylpropane disulphonic acid, 3-allyloxy-2-hydroxypropane sulphonic acid, diethylallylphosphonate, carboxyethyle acrylate; water-soluble salts of all of these monomers, such as their alkali metal salts, alkaline earth metal salts, or ammonium salts; and their mixtures. Also included are hemiesters of maleic acid or itaconic acid, their salts, and their mixtures.

In one particular embodiment, the hydrophilic anionic monomer(s) can be salified. This can also be a mixture of acid form and salified form, for example, a mixture of acrylic acid and acrylate.

By "salified", is meant the substitution of a proton of at least one acid function of the - R^{a}(=O)-OH type (with R= P, S or C) of the anionic monomer by a metal cation or organic cation to form a salt of the -R^{a}(=O)-OX type (X being a metal cation or organic cation). In other words, the non-salified form corresponds to the acid form of the monomer, for example R^{b}-C(=O)-OH in the case of the carboxylic acid function, while the salified form of the monomer corresponds to the R^{b}-C(=O)-O⁻ X⁺ form, X+ corresponding to an alkali cation or an organic cation. The salification of the acid functions of the polymer may be partial or total.

The salified form advantageously corresponds to the salts of alkali metals (Li, Na, K, etc.), alkaline-earth metals (Ca, Mg, etc.), and the organic cation is advantageously the ammonium ion or a tertiary ammonium. The preferred salts are sodium salts.

The salification may take place before or after polymerisation.

The polymer P1 (and therefore the base polymer PB1 or PB2) can also comprise hydrophilic zwitterionic monomers and/or hydrophobic monomers.

When the polymer P1 (and therefore the base polymer PB1 or PB2) comprises one or more hydrophobic monomers, the proportion is less than 5% in mol (with respect to the total number of moles of monomers) and their quantity is adjusted such that the polymer remains soluble in water.

In a preferred embodiment, the polymer P1 (and therefore the base polymer PB1 or PB2) is free of hydrophobic monomer.

The quantities of the different monomer(s) will be adjusted by a person skilled in the art in order not to exceed 100 mol% when preparing the base polymers PB1 and PB2.

The polymer P1 has advantageously an average molecular weight by weight of between 50 000 g/mol and 950 000 g/mol, preferably between 100 000 g/mol and 750 000 g/mol, more preferably between 150 000 g/mol and 500 000 g/mol.

The polymer P1 can further comprise at least one branching agent. A branched polymer is a non-linear polymer with side chains. The structuring of the polymer P1 is advantageously performed during the preparation of the base polymer PB1 or PB2.

The branching agent is advantageously chosen from among:
- structuring agents, which can be selected from the group comprising polyethylene unsaturated compounds (having, at least two unsaturated functions), like for example vinyl functions, in particular allylic or acrylic functions, and can include, for example, methylene bisacrylamide (MBA), triallyamine, or tetraallylammonium chloride, 1,2 dihydroxyethylene bis-(N-acrylamide), ethylene glycol (meth)acrylate;
- compounds having at least two epoxy functions,
- compounds having at least one unsaturated function and one epoxy function,
- macro-initiators, such as polyperoxides, polyazoics and transfer polyagents, such as polymercaptan polymers, and polyols,
- functionalised polysaccharides,
- water-soluble metal complexes composed:
   * of a metal of valence greater than 3 such as, as an example and in a non-limiting manner, aluminium, boron, zirconium, or also titanium, and
   * of a ligand carrying a hydroxyl function.

In a preferred embodiment, the polymer P1 is free of branching agent.

In a particular embodiment, the polymer P1 (advantageously the base polymer PB1 or PB2) comprises a transfer agent.

The transfer agent is advantageously chosen from among methanol; isopropylic alcohol; sodium hypophosphite; calcium hypophosphite; magnesium hypophosphite; potassium hypophosphite; ammonium hypophosphite; formic acid; sodium formiate; calcium formiate; magnesium formiate; potassium formiate; ammonium formiate; 2-mercaptoethanol; 3-mercaptopropanol; glycol dithiopropylene; thioglycerol; thioglycolic acid; thiohydracrylic acid; thiolactic acid; thiomalic acid; cysteine; aminoethanethiol; thioglycolates; allyl phosphites; allyl mercaptans; sodium methallysulphonate; calcium methallysulphonate; magnesium methallysulphonate; potassium methallysulphonate; ammonium methallysulphonate; polythiols, and their mixtures. Preferably, the transfer agent is sodium hypophosphite, sodium formate or their mixture.

In a particular embodiment, the polymer P1 is free of transfer agent.

### Polymer P2

The polymer P2 is chosen from the group consisting of: the polyethyleneimines obtained by polycondensation of ethylene dichloride with ammonia, the polyethyleneimines obtained by polycondensation of aziridine, and their mixtures.

The polyethylenemines obtained by polycondensation of aziridine are advantageously prepared according to documents US 2,182,306 and US 3,251,778.

The polyethylenemines are advantageously obtained by polycondensation of ethylene dichloride (EDC) with ammonia in the presence of a Brønsted base.

The polycondensation is done advantageously by adding an ammonia solution of an ethylene dichloride (EDC) casting and of a Brønsted base.

The Brønsted base can be any base known to a person skilled in the art, like sodium hydroxide or potassium hydroxide.

In a preferred embodiment, the molar ratio between ethylene dichloride (EDC) and the Brønsted base is advantageously between 1:5 and 1:1, preferably between 1:3 and 1:1, more preferably between 1:2 and 1:1.

In a preferred embodiment, the molar ratio between ammonia and ethylene dichloride (EDC) is advantageously between 5:1 and 1:1, preferably between 3:1 and 1:1, more preferably between 2:1 and 1:1.

The polycondensation temperature is advantageously between 50 and 120°C, preferably between 80 and 100°C.

In a preferred embodiment, the aqueous ammonia solution is heated at the polycondensation temperature before the start of the ethylene dichloride (EDC) casting and of the Brønsted base.

The polycondensation lasts advantageously between 60 minutes and 360 minutes, preferably between 120 minutes and 300 minutes, more preferably between 180 minutes and 260 minutes.

The polymer P2 has advantageously an average molecular weight by weight of between 1 500 g/mol and 500 000 g/mol, preferably between 2 000 g/mol and 400 000 g/mol, more preferably between 2 500 g/mol and 300 000 g/mol, more preferably between 5 000 g/mol and 250 000 g/mol, more preferably between 10 000 g/mol and 200 000 g/mol, more preferably between 20 000 g/mol and 150 000 g/mol.

The polymer P2 can further comprise at least one branching agent.

The structuring can be done during polymerisation or after polymerisation on the polymer P2. Preferably, the structuring is done after polymerisation.

The branching agent is advantageously chosen from among the compounds having at least two epoxy functions. In particular poly(ethylene glycol) diglycidyl ether, 1.4-butanediol diglycidyl ether, ethylene glycol diglycidyl ether can be mentioned, in a non-limiting manner. Preferably, this is poly(ethylene glycol) diglycidyl ether.

The quantity of branching agent in the polymer P2 is advantageously between 0.0001 and 1 mol% with respect to the number of amine functions present in the polymer P2, preferably between 0.001 and 0.1 mol%, more preferably between 0.01 and 0.05 mol%.

The polymer P2 has a quantity of tertiary amine advantageously between 1 and 50 mol% with respect to the total weight of amine functions in the polymer P2, preferably between 2 and 45 mol%, more preferably between 5 and 40 mol%.

### Creping adhesive composition

The creping adhesive composition comprises:
A/ at least one polymer P1 and at least one polymer P2; said at least one polymer P1 and at least one polymer P2 representing between 10 and 60% by weight of the adhesive composition; and
B/ at least one hydrophilic solvent representing between 40 and 90% by weight of the adhesive composition.

The hydrophilic solvent is advantageously water, it can also be a mixture of water and a water-miscible solvent like alcohols (advantageously C₁-C₈ alcohol) and/or ketones (advantageously C₃-C₈ ketone). Preferably, the hydrophilic solvent is water.

When the hydrophilic solvent is a mixture of water and a water-miscible solvent, the miscible solvent represents advantageously less than 30% by weight of the hydrophilic solvent, preferably less than 20% by weight, more preferably less than 10% by weight.

The weight ratio between the polymer P1 and the polymer P2 in the creping adhesive composition is comprised between 20:80 and 80:20.

In a preferred embodiment, the total quantity of primary amine in the polymers P1 and P2 (P1+P2) is advantageously less than 75 mol% with respect to the total quantity of amine (primary + secondary + tertiary + ammonium) present in the polymers P1 and P2 (P1+P2), preferably less than 60 mol%, and advantageously greater than 10 mol%, preferably greater than 20 mol%.

In a preferred embodiment, the total quantity of primary amine in the polymers P1 and P2 (P1+P2) is advantageously less than 50 mol% with respect to the total quantity of amine (primary + secondary + tertiary + ammonium) present in the polymers P1 and P2 (P1+P2), preferably less than 45 mol%, and advantageously greater than 2 mol%, preferably greater than 5 mol%.

The creping adhesive composition according to the invention can further comprise one or more additives conventionally used in the process of manufacturing tissue papers, for example and without limitation, plasticising agents, agents for protecting the Yankee against salts, biocides, pH modifiers, etc. can be mentioned.

As plasticising agents, water-soluble polyols can in particular be mentioned.

The water-soluble polyol is advantageously chosen from among compounds having one or more alkylene groups and having up to six hydroxyl groups, the alkylene groups being optionally interrupted by one or more O or NH groups. Preferred polyols comprise glycerol, ethylene glycol, 1,4-butanediol, diethanolamine, triethanolamine, sorbitol, diethylene glycol, triethylene glycol, propylene glycol, dipropylene glycol, polyethylene glycol. Preferably, the water-soluble polyol is glycerol.

Advantageously, the quantity of water-soluble polyols in the creping adhesive composition is between 1 and 25% by weight with respect to the total weight of the creping adhesive composition, preferably between 2 and 20% by weight, more preferably between 3 and 10% by weight.

As agents for protecting the Yankee against salts, monoammonium or diammonium phosphate can in particular be mentioned.

Advantageously, the quantity of agents for protecting the Yankee against salts in the creping adhesive composition is between 1 and 20% by weight with respect to the total weight of the creping adhesive composition, preferably between 2 and 15% by weight, more preferably between 3 and 10% by weight.

Advantageously, the pH of the creping adhesive composition is adjusted between 7 and 8.

The creping adhesive composition according to the invention is advantageously diluted with water before use, advantageously at a water/adhesive composition weight ratio of between 1:10 and 10:1.

The present invention also relates to a method for manufacturing tissue paper comprising the use of the creping adhesive composition according to the invention.

The method for manufacturing tissue paper comprises the following steps:
i) preparing a paper pulp comprising at least virgin and/or recycled fibres;
ii) diluting the paper pulp in order to form a fibers suspension;
iii) forming a paper sheet from the fibers suspension using press rollers;
iv) drying the paper sheet on a Yankee cylinder in order to obtain a dried paper sheet;
v) forming a tissue paper sheet by creping the dried paper sheet using a creping blade.

The creping adhesive composition according to the invention is applied before the drying of the paper sheet, i.e. between steps iii) and iv).

The application of the creping adhesive composition can be done by continuous spraying on the Yankee.

In a particular embodiment, the creping adhesive composition is sprayed between 0.5 g/m² and 100 g/m², preferably between 1 g/m² and 50 g/m², more preferably between 2 g/m² and 30 g/m², even more preferably between 5 g/m² and 20 g/m² (active matter P1+P2).

The present invention will be described in more detail, in reference to the following examples.

### EXAMPLES

### List of polymers used

- Comparative example polymer CE P1-1 corresponds to a polyvinylamine obtained by hydrolysis of a base polymer PB2 of polyvinylformamide (degree of hydrolysis of 50%), CE P1-1 having a molecular weight of 40 000 g/mol.
- The polymer P1-2 corresponds to a polyvinylamine obtained by hydrolysis of a base polymer PB2 of polyvinylformamide (degree of hydrolysis of 50%), P1-2 having a molecular weight of 50 000 g/mol.
- The polymer P1-3 corresponds to a polyvinylamine obtained by hydrolysis of a base polymer PB2 of polyvinylformamide (degree of hydrolysis of 50%), P1-3 having a molecular weight of 150 000 g/mol.
- The polymer P1-4 corresponds to a polyvinylamine obtained by hydrolysis of a base polymer PB2 of polyvinylformamide (degree of hydrolysis of 50%), P1-4 having a molecular weight of 950 000 g/mol.
- Comparative example polymer CE P1-5 corresponds to a polyvinylamine obtained by hydrolysis of a base polymer PB2 of polyvinylformamide (degree of hydrolysis of 50%), CE P1-5 having a molecular weight of 1 000 000 g/mol.
- The polymer P1-6 corresponds to a Hofmann rearrangement product in solution on a polymer poly(acrylamide-DADMAC) with a molar ratio DADMAC:Acrylamide of 30:70 and having a molecular weight of 100 000 g/mol.
- The polymer P1-7 corresponds to a Hofmann rearrangement product in solution on a polymer poly(acrylamide-DADMAC) with a molar ratio DADMAC:Acrylamide of 30:70 and having a molecular weight of 600 000 g/mol.
- Comparative example polymer CE P2-1 corresponds to a polyethyleneimine obtained by reaction of ethylene dichloride with ammonia, CE P2-1 having a molecular weight of 1 000 g/mol.
- The polymer P2-2 corresponds to a polyethyleneimine obtained by reaction of ethylene dichloride with ammonia, P2-2 having a molecular weight of 10 000 g/mol.
- The polymer P2-3 corresponds to a polyethyleneimine obtained by reaction of ethylene dichloride with ammonia, P2-3 having a molecular weight of 20 000 g/mol.
- The polymer P2-4 corresponds to a polyethyleneimine obtained by reaction of ethylene dichloride with ammonia, P2-4 having a molecular weight of 500 000 g/mol.
- Comparative example polymer CE P2-5 corresponds to a polyethyleneimine obtained by reaction of ethylene dichloride with ammonia, CE P2-5 having a molecular weight of 550 000 g/mol.

### Preparation of creping adhesive compositions

### Adhesive composition C1

In a beaker, under stirring, 45 g of a solution at 14% by weight of Polymer P1-2 with 30 g of a solution at 30% by weight of Polymer P2-2 are mixed. Water and formic acid are added to form 100 g of adhesive composition C1 having a pH of between 7 and 8.

The same experimental protocol is performed by modifying the polymers added, and optionally the quantities of water and formic acid to obtain 100 g of adhesive compositions C2 to C22 having a pH of between 7 and 8, the compositions are summarised in table 1. Furthermore, in the adhesive composition C2, 5 g of glycerol is added.

**Table 1 - Composition of the creping adhesive compositions according to the invention (INV) and of the comparative examples (CE)**

| **Creping adhesive composition** | **Polymer 1 (g)** | **Polymer 2 (g)** | **Glycerol (g)** | **Weight ratio P1/P2** |
|---|---|---|---|---|
| **C1 (INV)** | P1-2 (6,3) | P2-2 (9) | - | 41/59 |
| **C2 (INV)** | P1-2 (6,3) | P2-2 (9) | 5 | 41/59 |
| **C3 (CE)** | P1-2 (15,3) | - | - | 100/0 |
| **C4 (CE)** | - | P2-2 (15,3) | - | 0/100 |
| **C5 (INV)** | P1-2 (6,3) | P2-4 (9) | - | 41/59 |
| **C6 (INV)** | P1-4 (6,3) | P2-2 (9) | - | 41/59 |
| **C7 (INV)** | P1-3 (6,3) | P1-3 (9) | - | 41/59 |
| **C8 (INV)** | P1-4 (6,3) | P2-4 (9) | - | 41/59 |
| **C9 (CE)** | CE P1-1 (6,3) | P2-2 (9) | - | 41/59 |
| **C10 (CE)** | CE P1-1 (6,3) | P2-4 (9) | - | 41/59 |
| **C11 (CE)** | P1-2 (6,3) | CE P2-1 (9) | - | 41/59 |
| **C12 (CE)** | P1-2 (6,3) | CE P2-5 (9) | - | 41/59 |
| **C13 (CE)** | P1-4 (6,3) | CE P2-1 (9) | - | 41/59 |
| **C14 (CE)** | P1-4 (6,3) | CE P2-5 (9) | - | 41/59 |
| **C15 (CE)** | CE P1-5 (6,3) | P2-2 (9) | - | 41/59 |
| **C16 (CE)** | CE P1-5 (6,3) | P2-4 (9) | - | 41/59 |
| **C17 (INV)** | P1-2 (12,2) | P2-2 (3,1) | - | 80/20 |
| **C18 (CE)** | P1-2 (13) | P2-2 (2,3) | - | 85/15 |
| **C19 (INV)** | P1-4 (3,1) | P2-2 (12,2) | - | 20/80 |
| **C20 (CE)** | P1-4 (2,3) | P2-2 (13) | | 15/85 |
| **C21 (INV)** | P1-6 (7,65) | P2-2 (7,65) | - | 50/50 |
| **C22 (INV)** | P1-7 (7,65) | P2-2 (7,65) | - | 50/50 |

### Flexibility tests

Coatings which are too hard are often at the origin of a low durability of the creping blade and the stick-slip motion thereof which lead to defects on tissue papers and sometimes stick-slip motion marks on the Yankee cylinder. The dried adhesive must therefore be flexible in order to protect the Yankee cylinder and improve the duration of the creping blade.

### Protocol

In a 150 ml beaker, 5 ml of water and 5 ml of creping adhesive composition are mixed. The mixture is poured using a pipette on an aluminium plate, of 15 cm in diameter and of 2.5 cm. The plate is then heated for 2 hours at 105°C.

The flexibility of the adhesive is evaluated from 1 to 10 (1 is the lowest and 10 the highest) by folding the aluminium plate, according to the following scale:
1-2: The adhesive is fully or partially removed from the aluminium plate;
3-4: The adhesive is not removed, but a lot of cracks corresponding to the cracking of the adhesive layer are observed;
5-6: A few cracks are observed;
7-9: No cracks are observed, but a resistance to folding is felt during the folding of the aluminium plate;
10: The plate is folded in the same way as if there were no adhesive.

The results are summarised in table 2.

An acceptable flexibility value starts at 7.

**Table 2 - Results of the flexibility of the creping adhesive compositions according to the invention (INV) and of the comparative examples (CE)**

| **Creping adhesive composition** | **Flexibility** |
|---|---|
| **C1 (INV)** | 7 |
| **C2 (INV)** | 9 |
| **C3 (INV)** | 4 |
| **C4 (INV)** | 5 |
| **C5 (INV)** | 10 |
| **C6 (INV)** | 7 |
| **C7 (INV)** | 9 |
| **C8 (INV)** | 8 |
| **C9 (INV)** | 6 |
| **C10 (INV)** | 8 |
| **C11 (CE)** | 5 |
| **C12 (CE)** | 9 |
| **C13 (CE)** | 4 |
| **C14 (CE)** | 8 |
| **C15 (CE)** | 2 |
| **C16 (CE)** | 6 |
| **C17 (INV)** | 7 |
| **C18 (CE)** | 4 |
| **C19 (INV)** | 8 |
| **C20 (CE)** | 7 |
| **C21 (INV)** | 7 |
| **C22 (INV)** | 7 |

### Adherence tests

The adherence between the creping cylinder and the fibre strip is the first aim of the Yankee adhesive. However, this adherence must not be too high to avoid defects of the paper and a low stretching.

### Protocol

On a steel plate (A-Panel RS14 from Q-Lab; 2.5cm * 10cm) heated to 150°C for 5 seconds, is sprayed using a Paasche V5 spray, at a pressure of 1 bar, 9.18 g/m² of adhesive compositions previously prepared.

The steel plate is left to cool until reaching ambient temperature.

The paper towel strip with high absorption capacity is soaked in water, then pressed under two pieces of blotting paper with a 2 kg roller, by performing a back-and-forth motion, before being deposited on the steel plate. A piece of blotting paper is thus placed on the strip and is again pressed with a 2 kg roller, by performing a back-and-forth motion.

Finally, the plate is put in an oven for 5 minutes at 95°C.

The adherence force at 180°C of the strip on the plate is measured, thanks to a removal program on Testometric AX, and the values are summarised in table 3.

In the adherence test, the most suitable adherence force is between 0.2 and 0.6 N (i.e. classed 2 or 3 on a scale of 1 to 10).

**Table 3 - Results of the adherence of the creping adhesive compositions according to the invention (INV) and of the comparative examples (CE)**

| **Creping adhesive composition** | **Flexibility** | **Adherence force (N)** | **Adherence** |
|---|---|---|---|
| **C1 (INV)** | 7 | 0.48 | 3 |
| **C2 (INV)** | 9 | 0.29 | 2 |
| **C3 (INV)** | 4 | 0.4 | 3 |
| **C4 (INV)** | 5 | 2.12 | 8 |
| **C5 (INV)** | 10 | 0.35 | 3 |
| **C6 (INV)** | 7 | 0.28 | 2 |
| **C7 (INV)** | 9 | 0.27 | 2 |
| **C8 (INV)** | 8 | 0.42 | 3 |
| **C9 (INV)** | 6 | 0.84 | 4 |
| **C10 (INV)** | 8 | 2.16 | 8 |
| **C11 (CE)** | 5 | 1.74 | 7 |
| **C12 (CE)** | 9 | 2.84 | 9 |
| **C13 (CE)** | 4 | 0.38 | 3 |
| **C14 (CE)** | 8 | 1.1 | 5 |
| **C15 (CE)** | 2 | 0.21 | 2 |
| **C16 (CE)** | 6 | 1.51 | 6 |
| **C17 (INV)** | 7 | 0.76 | 4 |
| **C18 (CE)** | 4 | 0.75 | 4 |
| **C19 (INV)** | 8 | 1.07 | 5 |
| **C20 (CE)** | 7 | 2.11 | 8 |
| **C21 (INV)** | 7 | 0.51 | 3 |
| **C22 (INV)** | 7 | 0.37 | 2 |

### Water absorption and dissolution tests

A high water absorption and a low dissolution are important features of a Yankee adhesive. The high water absorption assists the wet fibre strip to penetrate into the Yankee coating, while preventing the hardening of the Yankee coating. A low dissolution is necessary to avoid the migration of the adhesive in the wet fibre strip, which can lead to a decrease in the surface protection of the Yankee.

### Protocol

The creping adhesive composition (10 g) prepared beforehand is progressively cast on an aluminium plate of 15 cm diameter, then dried for 4 hours at 105°C.

The plate is then left to cool until ambient temperature, then weighed before being immersed in a receptacle containing 3 L of water for 150 seconds, under a stirring which is sufficient to form a slight vortex.

The plate is then drained and weighed again for measure the water absorbed.

The plate is then dried for 2 hours at 105°C then weighed once again, after having cooled to ambient temperature, to measure the quantity of creping adhesive composition which dissolved.

The results are summarised in table 4.

An acceptable absorption value is classed above 7 on a scale of 1 to 10.

An acceptable dissolution value is classed above 7 on a scale of 1 to 10.

**Table 4 - Results of absorption and dissolution of the creping adhesive compositions according to the invention (INV) and of the comparative examples (CE)**

| **Creping adhesive composition** | **Absorbed water (%)** | **Absorption** | **Percentage of dissolved adhesive composition** | **Dissolution** |
|---|---|---|---|---|
| **C1 (INV)** | 123.4 | 8 | 8.4 | 9 |
| **C2 (INV)** | 124.2 | 8 | 14.4 | 8 |
| **C3 (CE)** | 93.2 | 6 | 47.2 | 6 |
| **C4 (CE)** | 70.1 | 5 | 77.1 | 2 |
| **C5 (INV)** | 112.3 | 7 | 17.6 | 8 |
| **C6 (INV)** | 125.4 | 8 | 4.1 | 10 |
| **C7 (INV)** | 138.9 | 10 | 7.9 | 9 |
| **C8 (INV)** | 121.7 | 8 | 8.2 | 9 |
| **C9 (CE)** | 44.2 | 3 | 48.8 | 6 |
| **C10 (CE)** | 90.1 | 6 | 58.1 | 4 |
| **C11 (CE)** | 52.1 | 4 | 29.3 | 7 |
| **C12 (CE)** | 88.4 | 6 | 67.9 | 3 |
| **C13 (CE)** | 89.6 | 6 | 28.3 | 7 |
| **C14 (CE)** | 122.2 | 8 | 47.8 | 6 |
| **C15 (CE)** | 109.3 | 7 | 13.9 | 8 |
| **C16 (CE)** | 123.9 | 8 | 51.1 | 6 |
| **C17 (INV)** | 130.2 | 8 | 35.4 | 7 |
| **C18 (CE)** | 94.1 | 6 | 43.5 | 6 |
| **C19 (INV)** | 119.7 | 8 | 31.1 | 7 |
| **C20 (CE)** | 87.5 | 6 | 88.2 | 2 |
| **C21 (INV)** | 121.3 | 8 | 10.1 | 9 |
| **C22 (INV)** | 126.2 | 8 | 3.8 | 10 |

All of the features of the different tests carried out are summarised in table 5.

**Table 5 - Results of the values of the creping adhesive compositions according to the invention (INV) and of the comparative examples (CE)**

| **Creping adhesive composition** | **Flexibility** | **Adherence** | **Absorption** | **Dissolution** |
|---|---|---|---|---|
| **C1 (INV)** | 7 | 3 | 8 | 9 |
| **C2 (INV)** | 9 | 2 | 8 | 8 |
| **C3 (CE)** | 4 | 3 | 6 | 6 |
| **C4 (CE)** | 5 | 8 | 5 | 2 |
| **C5 (INV)** | 10 | 3 | 7 | 8 |
| **C6 (INV)** | 7 | 2 | 8 | 10 |
| **C7 (INV)** | 9 | 2 | 10 | 9 |
| **C8 (INV)** | 8 | 3 | 8 | 9 |
| **C9 (CE)** | 6 | 4 | 3 | 6 |
| **C10 (CE)** | 8 | 8 | 6 | 4 |
| **C11 (CE)** | 5 | 7 | 4 | 7 |
| **C12 (CE)** | 9 | 9 | 6 | 3 |
| **C13 (CE)** | 4 | 3 | 6 | 7 |
| **C14 (CE)** | 8 | 5 | 8 | 6 |
| **C15 (CE)** | 2 | 2 | 7 | 8 |
| **C16 (CE)** | 6 | 6 | 8 | 6 |
| **C17 (INV)** | 7 | 4 | 8 | 7 |
| **C18 (CE)** | 4 | 4 | 6 | 6 |
| **C19 (INV)** | 8 | 5 | 8 | 7 |
| **C20 (CE)** | 7 | 8 | 6 | 2 |
| **C21 (INV)** | 7 | 3 | 8 | 9 |
| **C22 (INV)** | 7 | 2 | 8 | 10 |

Only the adhesive compositions according to the invention (C1, C2, C5, C6, C7, C8, C17, C19, C21 and C22) offer satisfactory properties in terms of flexibility, adherence, water absorption and dissolution in water.

## Claims

1. Creping adhesive composition comprising:
A/ at least one polymer P1 and at least one polymer P2; said at least one polymer P1 and at least one polymer P2 representing between 10 and 60% by weight of the adhesive composition; and
B/ at least one hydrophilic solvent representing between 40 and 90% by weight of the adhesive composition;
i) the polymer P1, having an average molecular weight by weight of between 50 000 and 950 000 g/mol, chosen from the group consisting of:
* polyamines obtained by Hofmann rearrangement on a base polymer PB1 of at least one monomer chosen from the group consisting of acrylamide, methacrylamide and their mixtures;
* polyamines resulting from the hydrolysis of amide groups -N(R²)-CO-R¹ of a base polymer PB2 of at least one monomer of formula (I): 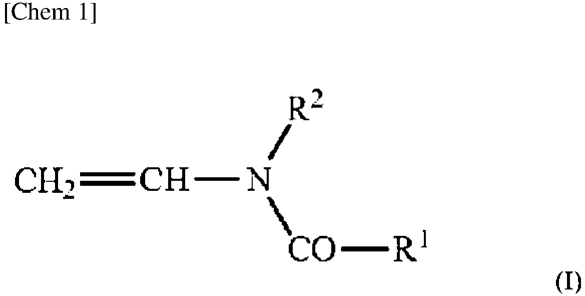 wherein:
R¹ and R² are, independently, a hydrogen atom or an alkyl chain having from 1 to 6 carbon atoms, and
* their mixtures;
ii) the polymer P2, having an average molecular weight by weight of between 1 500 and 500 000 g/mol, chosen from the group consisting of:
* polyethyleneimines obtained by polycondensation of ethylene dichloride with ammonia,
* polyethyleneimines obtained by polycondensation of aziridine, and
* their mixtures
the weight ratio between polymer P1 and polymer P2 in the composition is comprised between 20:80 and 80:20 and the molecular weight is determined by the intrinsic viscosity of the polymer determined using the Mark-Houwink equation: $\left[η\right] = K {M}^{α}$
**[η]** represents the intrinsic viscosity of the polymer as determined by the solution viscosity measurement method
**K** represents an empirical constant
**M** represents the molecular weight of the polymer
**α** represents the Mark-Houwink coefficient
**K** and **α** depend on the particular polymer-solvent system.

2. Creping adhesive composition according to claim 1, ***wherein*** the polymer P1 is a polyamine resulting from the hydrolysis of the amide groups -N(R²)-CO-R¹ of a base polymer PB2 of a monomer of formula (I): 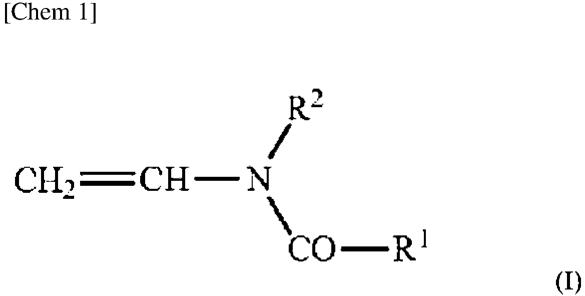 wherein:
R¹ and R² are, independently, a hydrogen atom or an alkyl chain having from 1 to 6 carbon atoms.

3. Creping adhesive composition according to claim 2, ***wherein*** the polymer P1 is a polyamine having a degree of hydrolysis of between 1 and 100 mol%.

4. Creping adhesive composition according to any one of the preceding claims, ***wherein*** the polymer P1 comprises at least one monomer having a quaternary amine function.

5. Creping adhesive composition according to any one of the preceding claims, ***wherein*** the polymer P1 comprises at least one monomer having a quaternary amine function and the monomer having a quaternary amine function is diallyldimethyl ammonium chloride.

6. Creping adhesive composition according to one of claims 4 or 5, ***wherein*** the monomer having a quaternary amine function is present at a quantity of at least 25 mol% and at most 50 mol%.

7. Creping adhesive composition according to one of the preceding claims, ***wherein*** the polymer P2 is obtained by polycondensation of ethylene dichloride with ammonia.

8. Creping adhesive composition according to one of the preceding claims, ***wherein*** the polymer P2 comprises between 0.0001 and 1 mol% of at least one branching agent, with respect to the quantity of amines present in the polymer P2.

9. Creping adhesive composition according to any one of the preceding claims, ***wherein*** the polymer P2 comprises a branching agent chosen from the group consisting of poly(ethylene glycol) diglycidyl ether, 1.4-butanediol diglycidyl ether, ethylene glycol diglycidyl ether.

10. Method for manufacturing a tissue paper comprising the use of a creping adhesive composition according to any one of claims 1 to 9.

## Patentansprüche

1. Krepp-Klebstoffzusammensetzung, die Folgendes umfasst:
A/ mindestens ein Polymer P1 und mindestens ein Polymer P2; wobei das mindestens eine Polymer P1 und das mindestens eine Polymer P2 zwischen 10 und 60 Gewichts-% der Klebstoffzusammensetzung ausmachen; und
B/ mindestens ein hydrophiles Lösungsmittel, das zwischen 40 und 90 Gewichts-% der Klebstoffzusammensetzung ausmacht;
i) wobei das Polymer P1, welches ein Gewichtsmittel des Molekulargewichts zwischen 50.000 und 950.000 g/mol aufweist, aus der Gruppe ausgewählt ist, die aus Folgendem besteht:
* Polyaminen, die erhalten wurden, indem mindestens ein Monomer, das aus der Gruppe ausgewählt ist, welche aus Acrylamid, Methacrylamid und deren Mischungen besteht, an einem Basispolymer PB1 eine Hofmann-Umlagerung erfährt;
* Polyaminen, die durch Hydrolyse von Amidgruppen -N(R²)-CO-R¹ eines Basispolymers PB2 aus mindestens einem Monomer der Formel I: 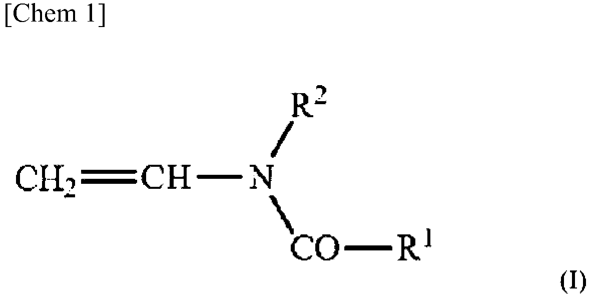 entstehen, wobei:
R¹ und R² auf unabhängige Weise für ein Wasserstoffatom oder eine Alkylkette mit 1 bis 6 Kohlenstoffatomen stehen, und
* deren Mischungen;
ii) wobei das Polymer P2, welches ein Gewichtsmittel des Molekulargewichts zwischen 1.500 und 500.000 g/mol aufweist, aus der Gruppe ausgewählt ist, diee aus Folgendem besteht:
* Polyethyleniminen, die durch Polykondensation von Ethylendichlorid mit Ammoniak erhalten wurden;
* Polyethyleniminen, die durch Polykondensation von Aziridin erhalten wurden, und
* deren Mischungen
wobei das Gewichtsverhältnis zwischen dem Polymer P1 und dem Polymer P2 in der Zusammensetzung im Bereich von 20:80 bis 80:20 liegt und das Molekulargewicht durch die intrinsische Viskosität des Polymers bestimmt wird, welche unter Anwendung der Mark-Houwink-Gleichung bestimmt wird: $\left[η\right] = K {M}^{α}$
wobei **[η]** für die intrinsische Viskosität des Polymers steht, wie sie mittels die Methode der Viskositätsmessung in Lösung bestimmt wurde
**K** für eine empirische Konstante steht
**M** für das Molekulargewicht des Polymers steht
**α** für den Mark-Houwink-Koeffizienten steht
**K** und **α** vom jeweiligen Polymer-Lösungsmittel-System abhängen.

2. Krepp-Klebstoffzusammensetzung nach Anspruch 1, ***wobei*** es sich bei dem Polymer P1 um ein Polyamin handelt, das durch Hydrolyse der Amidgruppen -N(R²)-CO-R¹ eines Basispolymers PB2 aus einem Monomer der Formel (I): 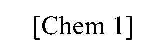 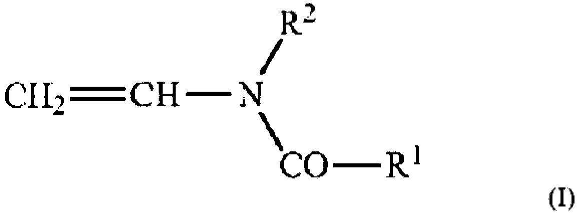 entsteht, wobei:
R¹ und R² auf unabhängige Weise für ein Wasserstoffatom oder eine Alkylkette mit 1 bis 6 Kohlenstoffatomen stehen.

3. Krepp-Klebstoffzusammensetzung nach Anspruch 2, ***wobei*** es sich bei dem Polymer P1 um ein Polyamin mit einem Hydrolysegrad zwischen 1 und 100 mol% handelt.

4. Krepp-Klebstoffzusammensetzung nach einem beliebigen der vorhergehenden Ansprüche, ***wobei*** das Polymer P1 mindestens ein Monomer mit quartärer Aminfunktion umfasst.

5. Krepp-Klebstoffzusammensetzung nach einem beliebigen der vorhergehenden Ansprüche, ***wobei*** das Polymer P1 mindestens ein Monomer mit quartärer Aminfunktion umfasst und es sich bei dem Monomer mit quartärer Aminfunktion um Diallyldimethyl-Ammoniumchlorid handelt.

6. Krepp-Klebstoffzusammensetzung nach einem der Ansprüche 4 oder 5, ***wobei*** das Monomer mit einer quartärer Aminfunktion in einer Menge von mindestens 25 mol% und höchstens 50 mol% vorliegt.

7. Krepp-Klebstoffzusammensetzung nach einem der vorhergehenden Ansprüche, ***wobei*** das Polymer P2 durch Polykondensation von Ethylendichlorid mit Ammoniak erhalten wird.

8. Krepp-Klebstoffzusammensetzung nach einem der vorhergehenden Ansprüche, ***wobei*** das Polymer P2 zwischen 0,0001 und 1 mol% mindestens eines Verzweigungsmittels umfasst, bezogen auf die Menge an Aminen, welche im Polymer P2 vorliegt.

9. Krepp-Klebstoffzusammensetzung nach einem beliebigen der vorhergehenden Ansprüche, ***wobei*** das Polymer P2 ein Verzweigungsmittel umfasst, das aus der Gruppe ausgewählt ist, welche aus Poly(ethylenglycol)diglycidylether, 1,4-Butandioldiglycidylether, Ethylenglykoldiglycidylether besteht.

10. Verfahren zur Herstellung eines Tissuepapiers, wobei es die Verwendung einer Krepp-Klebstoffzusammensetzung nach einem beliebigen der Ansprüche 1 bis 9 umfasst.

## Revendications

1. Composition adhésive de crépage comprenant :
A/ au moins un polymère P1 et au moins un polymère P2; lesdits au moins un polymère P1 et au moins un polymère P2 représentant entre 10 et 60 % en poids de la composition adhésive ; et
B/ au moins un solvant hydrophile représentant entre 40 et 90 % en poids de la composition adhésive ;
i) le polymère P1, ayant un poids moléculaire moyen en poids compris entre 50 000 et 950 000 g/mol, choisi dans le groupe constitué :
* des polyamines obtenues par réarrangement de Hofmann sur un polymère base PB1 d'au moins un monomère choisi dans le groupe constitué de l'acrylamide, de la méthacrylamide et de leurs mélanges ;
* des polyamines résultant de l'hydrolyse des groupements amide -N(R²)-CO-R¹ d'un polymère base PB2 d'au moins un monomère de formule (I) : 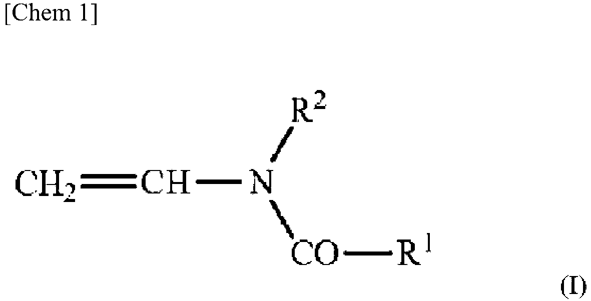 dans laquelle :
R¹ et R² sont, indépendamment, un atome d'hydrogène ou une chaîne alkyle ayant de 1 à 6 atomes de carbones, et
* de leurs mélanges ;
ii) le polymère P2, ayant un poids moléculaire moyen en poids compris entre 1 500 et 500 000 g/mol, choisi dans le groupe constitué :
* des polyéthylèneimines obtenues par polycondensation de dichlorure d'éthylène avec de l'ammoniac,
* des polyéthylèneimines obtenues par polycondensation de l'aziridine, et
* leurs mélanges
le rapport en poids entre le polymère P1 et le polymère P2 dans la composition est compris entre 20:80 et 80:20 et le poids moléculaire est déterminé par la viscosité intrinsèque du polymère déterminée par l'équation de Mark-Houwink : $\left[η\right] = K {M}^{α}$
**[η]** représente la viscosité intrinsèque du polymère déterminée par la méthode de mesure de viscosité en solution.
**K** représente une constante empirique.
**M** représente le poids moléculaire du polymère.
**α** représente le coefficient de Mark-Houwink.
**K** et **α** dépendent du système particulier polymère-solvant.

2. Composition adhésive de crépage selon la revendication 1, ***caractérisée* en ce que** le polymère P1 est une polyamine résultant de l'hydrolyse des groupements amide -N(R²)-COR¹ d'un polymère base PB2 d'un monomère de formule (I) : 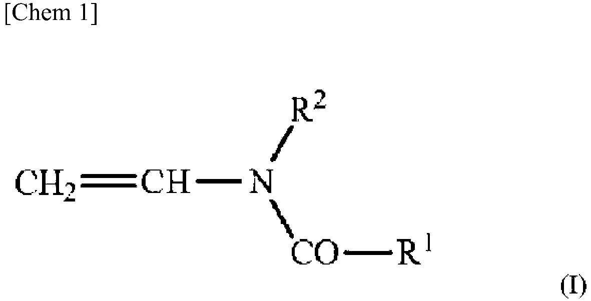 dans laquelle :
R¹ et R² sont, indépendamment, un atome d'hydrogène ou une chaîne alkyle ayant de 1 à 6 atomes de carbones.

3. Composition adhésive de crépage selon la revendication 2, ***caractérisée* en ce que** le polymère P1 est une polyamine ayant un degré d'hydrolyse compris entre 1 et 100 mol%.

4. Composition adhésive de crépage selon l'une des revendications précédentes, ***caractérisée* en ce que** le polymère P1 comprend au moins un monomère ayant une fonction amine quaternaire.

5. Composition adhésive de crépage selon l'une des revendications précédentes, ***caractérisée* en ce que** le polymère P1 comprend au moins un monomère ayant une fonction amine quaternaire et le monomère ayant une fonction amine quaternaire est le chlorure de diallyl diméthyl ammonium.

6. Composition adhésive de crépage selon l'une des revendications 4 ou 5, ***caractérisée* en ce que** le monomère ayant une fonction amine quaternaire est présent à une quantité d'au moins 25 mol% et au plus de 50 mol%.

7. Composition adhésive de crépage selon l'une des revendications précédentes, ***caractérisée* en ce que** le polymère P2 est obtenu par polycondensation de dichlorure d'éthylène avec de l'ammoniac.

8. Composition adhésive de crépage selon l'une des revendications précédentes, ***caractérisée* en ce que** le polymère P2 comprend entre 0,0001 et 1 mol% d'au moins un agent de ramification, par rapport à la quantité d'amines présentes dans le polymère P2.

9. Composition adhésive de crépage selon l'une des revendications précédentes, ***caractérisée* en ce que** le polymère P2 comprend un agent de ramification choisi dans le groupe constitué de l'éther diglycidique du poly(éthylèneglycol), l'éther diglycidique du 1,4-butanediol, l'éther diglycidique de l'éthyleneglycol.

10. Procédé de fabrication d'un papier tissue comprenant l'utilisation d'une composition adhésive de crépage selon l'une des revendications 1 à 9.
